# EUROPEAN PATENT SPECIFICATION

(11) **EP 2 472 945 B1**
(45) Date of publication and mention of the grant of the patent: **23.04.2014**
(21) Application number: 10811206.1
(22) Date of filing: 23.07.2010
(51) Int. Cl.: H04W 28/10

(54) **METHOD AND DEVICE FOR IMPLEMENTING ADMISSION CONTROL**
VERFAHREN UND VORRICHTUNG ZUR IMPLEMENTIERUNG EINER ZUGANGSSTEUERUNG
PROCÉDÉ ET DISPOSITIF DE MISE EN OEUVRE D UN CONTRÔLE D ADMISSION

(30) Priority: 28.08.2009 CN 200910168104
(43) Date of publication of application: 04.07.2012
(73) Proprietor: ZTE Corporation, Guangdong Province 518057 (CN)
(72) Inventor: WANG, Xuhui, Shenzhen Guangdong 518057 (CN); HAN, Lingfei, Shenzhen Guangdong 518057 (CN); LIU, Chenji, Shenzhen Guangdong 518057 (CN)
(74) Representative: Zerbi, Guido Maria
(86) International application number: PCT/CN2010/075426
(87) International publication number: WO 2011/023046

(56) References cited:
- CN-A- 1 691 617
- CN-A- 1 913 498
- CN-A- 1 997 226
- CN-A- 101 494 881
- CN-A- 101 662 799
- US-A1- 2006 146 874
- US-A1- 2007 294 448

## Description

### Technical Field

The present invention relates to the field of mobile communication, and in particular, to a method and device for implementing admission control.

### Background of the Related Art

Base station controllers (BSC) and base transceiver stations (BTS) in the early Global System for Mobile Communications (GSM) are generally connected in a circuit transmission manner, and most commonly by an E1 line of 2M. With the development of the telecommunications industry, flexibility and low cost of IP transmission are gradually attached great importance. Therefore, schemes using an IP manner to access BTSs are increasingly adopted.

For a resource distribution scheme of BTS IP access, generally speaking, a manner of distributing a fixed quantity of bandwidth resources for channel activation of each service is used.

After all bandwidth resources on corresponding base stations or paths have been completed, new service access or channel activation will no longer be allowed. This manner has the following problems: firstly in the circuit switching (CS) domain, due to introduction of discontinuous transmission (DTX), data traffic is not in equilibrium, and there is no voice transmission in a certain direction for a certain percentage of time, thereby the traffic is very low; secondly, in the aspect of packet switching (PS), since the GSM is managed as per channel, resources are distributed according to the bandwidth requirement of maximum coding mode when the channel is activated, but actually what code rate being used by a terminal operating on this channel is influenced by wireless environments, so the utilization of the bandwidth may also be very insufficient. It can be seen from the above described problems that such a resource management manner will cause the situation that new services can not be accessed when IP resources are idle. (see also document CN 1997226 for background information)

### Content of the Invention

A technical problem to be solved by the present invention is to provide a method and device for implementing admission control so as to bear more service accesses in the case of limited IP transmission resources.

In order to solve the above technical problem, the present invention discloses a method for implementing admission control comprising:
when a base station controller receives a bandwidth admission application and when a sum of a bandwidth of the bandwidth admission application and an accumulative application bandwidth is within a preset overbooking area, determining whether a sum of the bandwidth of the bandwidth admission application and an actual use value of a current bandwidth is beyond a bandwidth stabilizing work area, and if yes, rejecting the bandwidth admission application;
wherein a bandwidth position of the overbooking area is higher than a bandwidth position of the bandwidth stabilizing work area.

Preferably, in the method, before determining whether the sum of the bandwidth of the bandwidth admission application and the actual use value of the current bandwidth is beyond the bandwidth stabilizing work area, the base station controller further determines whether the actual use value of the current bandwidth is beyond the bandwidth stabilizing work area;
if the actual use value of the current bandwidth is not beyond the bandwidth stabilizing work area, then it is determined whether the sum of the bandwidth of the bandwidth admission application and the actual use value of the current bandwidth is beyond the bandwidth stabilizing work area; and
if the actual use value of the current bandwidth is beyond the bandwidth stabilizing work area, then the bandwidth admission application is rejected.

Preferably, if the base station controller determines that the actual use value of the current bandwidth is lower than the bandwidth stabilizing work area and the sum of the bandwidth of the bandwidth admission application and the actual use value of the current bandwidth is not beyond the bandwidth stabilizing work area, then the bandwidth admission application is admitted.

Preferably, when the base station controller determines that the sum of the bandwidth of the bandwidth admission application and the accumulative application bandwidth is beyond the preset overbooking area, the bandwidth admission application is rejected; and
when the base station controller determines that the sum of the bandwidth of the bandwidth admission application and the accumulative application bandwidth is lower than the preset overbooking area, the bandwidth admission application is admitted.

Preferably, the base station controller further updates a current accumulative application bandwidth value in real time and measures the actual use value of the current bandwidth in real time.

After the base station controller measures the actual use value of the current bandwidth in real time, if it is determined that the actual use value of the current bandwidth is beyond the bandwidth stabilizing work area, then bandwidth traffic control is performed, the actual use value of the bandwidth is decreased to be within the bandwidth stabilizing work area, and the actual use value of the current bandwidth and the current accumulative application bandwidth value are updated in real time based on bandwidth traffic control results.

Preferably, the base station controller determines the overbooking area based on an bandwidth use upper limit and an preset excess bandwidth distribution upper limit; and
the base station controller determines the bandwidth stabilizing work area based on a preset bandwidth distribution stabilizing lower limit value and an bandwidth distribution stabilizing upper limit value.

The present invention further discloses an device for implementing admission control comprising a determination unit and an admission control unit, wherein
the determination unit is configured to, when a bandwidth admission application is received and when a sum of a bandwidth of the bandwidth admission application and an accumulative application bandwidth is within a preset overbooking area, and if it is determined that a sum of the bandwidth of the bandwidth admission application and a actual use value of a current bandwidth is beyond a bandwidth stabilizing work area, send the determination result to the admission control unit, wherein a bandwidth position of the overbooking area is higher than a bandwidth position of the bandwidth stabilizing work area; and
the admission control unit is configured to receive the determination result sent by the determination unit, and reject the bandwidth admission application when the determination result is that the sum of the bandwidth of the bandwidth admission application and the actual use value of the current bandwidth is beyond the bandwidth stabilizing work area.

Preferably, in the device, the determination unit is further configured to determine whether the actual use value of the current bandwidth is beyond the bandwidth stabilizing work area and send the determination result to the admission control unit; and
the admission control unit is further configured to reject the bandwidth admission application when the received determination result is that the actual use value of the current bandwidth is beyond the bandwidth stabilizing work area; and accept the bandwidth admission application when the received determination result is that the actual use value of the current bandwidth is not beyond the bandwidth stabilizing work area and the sum of the bandwidth of the bandwidth admission application and the actual use value of the current bandwidth is not beyond the bandwidth stabilizing work area.

Preferably, the determination unit is further configured to send the determination result to the admission control unit when determining that the sum of the bandwidth of the bandwidth admission application and the accumulative application bandwidth is beyond the preset overbooking area; and send the determination result to the admission control unit when determining that the sum of the bandwidth of the bandwidth admission application and the accumulative application bandwidth is lower than the preset overbooking area; and
the admission control unit is further configured to reject the bandwidth admission application when the received determination result is that the sum of the bandwidth of the bandwidth admission application and the accumulative application bandwidth is beyond the preset overbooking area; and admit the bandwidth admission application when the received determination result is that the sum of the bandwidth of the bandwidth admission application and the accumulative application bandwidth is lower than the preset overbooking area.

Preferably, the determination unit is further configured to read the actual use value of the current bandwidth in the admission control unit, determine whether the read actual use value of the current bandwidth is beyond the bandwidth stabilizing work area in real time, and send the determination result to the admission control unit; and
the admission control unit is further configured to, when the received determination result is that the actual use value of the current bandwidth is beyond the bandwidth stabilizing work area, perform bandwidth traffic control, decrease the actual use value of the bandwidth to be within the bandwidth stabilizing work area, and update the actual use value of the current bandwidth and the current accumulative application bandwidth value in real time based on bandwidth traffic control results.

The technical scheme of the present invention dynamically corrects the distributable bandwidth by using a feedback mechanism so as to bear more service accesses in the case of limited IP transmission resources.

### Brief Description of Drawings

FIG. 1 (a) is a block diagram of an admission control device according to an embodiment of the present invention;
FIG. 1 (b) is a schematic diagram of a resource pool and each threshold position area according to an embodiment of the present invention;
FIG. 2 is a flow chart of admission determination steps according to an embodiment of the present invention.

### Preferred Embodiments of the Present Invention

The main idea of the present invention is that, for characteristics of GSM system services, bandwidth resources can be used sufficiently through a feedback mechanism of the actual bandwidth so as to support more service accesses as much as possible, and retain a bandwidth buffer area to avoid congestion of transmission as much as possible.

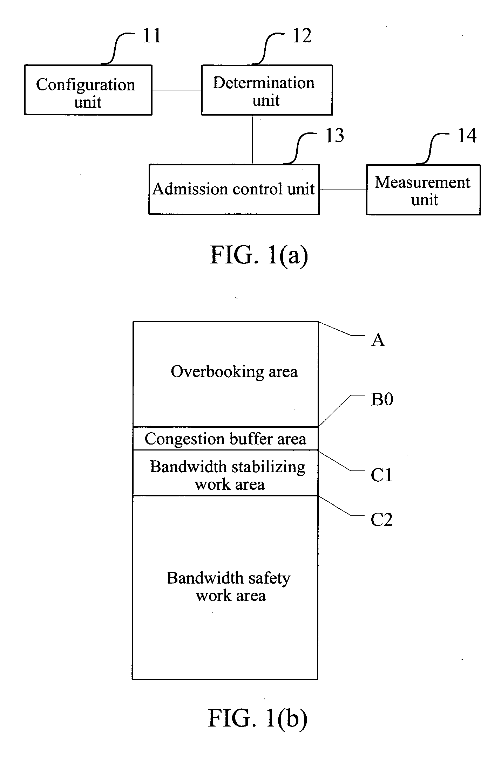

An admission control device according to an embodiment of the present invention can be used in a base station controller. The admission control device, a structure of which is shown in FIG. 1(a), includes a configuration unit 11, a determination unit 12, an admission control unit 13 and a measurement unit 14. Functions of each unit will be described below.

The configuration unit 11 is configured to configure various parameters and threshold values to determine an overbooking area, a congestion buffer area, a bandwidth stabilizing work area and a bandwidth safety work area, as shown in FIG. 1(b).

In the present embodiment, the configuration unit 11 defines (that is, configures) bandwidth resources used by a transmission bureau as a bandwidth pool, a bandwidth use upper limit of which is defined as B0, accumulates bandwidths of all applications which are successfully admitted by the bureau into B1, and defines a actual use value of the current bandwidth (that is, the actual bandwidth occupancy in the transmission bureau on an IP interface of a base station controller (BSC)) as a variable B2.

An excess bandwidth distribution upper limit A is configured; in the present embodiment, A can be calculated through the defined excess threshold (which generally is expressed as a percentage a1 or a fixed bandwidth value a2), and at this point the excess bandwidth distribution upper limit A=B0 X (1+a1) or A=B0+a2;
a bandwidth distribution stabilizing upper limit C1 is configured; in the present embodiment, C1 can be calculated through the defined actual bandwidth safety upper limit (which is generally expressed as a percentage m1 or a fixed bandwidth value m2), and at this point the bandwidth distribution stabilizing upper limit C1=B0*(1-m1) or C1=B0-m2;
a bandwidth distribution stabilizing lower limit C2 is configured; in the present embodiment, C2 can be calculated through the defined actual bandwidth safety lower limit (which is generally expressed as a percentage n1 or a fixed bandwidth value n2), and at this point the bandwidth distribution stabilizing lower limit C2=B0*(1-n1) or C2=B0-n2.
where n1>m1, and n2>m2;
an overbooking area is between B0 and A;
a congestion buffer area is between B0 and C1;
a bandwidth stabilizing work area is between C1 and C2; and
a bandwidth safety work area is an area lower than C2.

The determination unit 12 is configured to determine whether B2 in the admission control unit 13 is greater than C1 in real time, send the determination result to the admission control unit 13, and when the BSC receives a bandwidth admission application, if it is determined that the sum of a bandwidth Bi of the bandwidth admission application and an accumulative application bandwidth B1 is beyond the overbooking area, then send the determination result to the admission control unit 13; if it is determined that the sum of the bandwidth Bi of the bandwidth admission application and the accumulative application bandwidth B1 is within the overbooking area, then further determine whether a actual use value of the current bandwidth B2 is lower than the bandwidth stabilizing work area; if B2 is lower than the bandwidth stabilizing work area, then send the determination result to the admission control unit 13; if B2 is not lower than (that is, is within or is beyond) the bandwidth stabilizing work area, then determine whether B2+Bi is beyond the bandwidth stabilizing work area and send the determination result to the admission control unit 13.

In the specific implementation, the determination unit 12 makes the following determinations successively based on each threshold value in the configuration unit 11.

When receiving a new bandwidth admission application, the determination unit 12 firstly determines whether the accumulative application bandwidth (that is, the current application bandwidth Bi + the previous accumulative application bandwidth B1) is beyond the threshold value B0 after the admission is accepted, and if yes, the determination unit 12 performs the next determination operation, otherwise, it sends the determination result to the admission control unit 13 and will not perform the subsequent determination operation. Secondly, the determination unit 12 determines whether the accumulative application bandwidth (that is, Bi+B1) is beyond the threshold value A, and if yes, the determination unit 12 sends the determination result to the admission control unit 13 and will not perform the subsequent determination operation, otherwise, it performs the next determination operation. Then the determination unit 12 determines whether B2 is beyond the threshold C2, and if yes, the determination unit 12 sends the determination result to the admission control unit 13, otherwise, it performs the next determination operation. Finally, the determination unit 12 determines whether the sum of B2 and B2 and the applied bandwidth Bi are beyond the threshold C1 and sends the determination result to the admission control unit 13.

The admission control unit 13 is configured to perform the corresponding operation based on the determination result sent by the determination unit 12, update the current accumulative application bandwidth value B1 in real time, and update B2 in real time based on the measurement result sent by the measurement unit 14.

When the determination result sent by the determination unit 12 is that the accumulative application bandwidth (Bi+B1) is not beyond the threshold value B0, the admission control unit 13 accepts the bandwidth admission application.

When the determination result is that the accumulative application bandwidth (Bi+B1) is beyond the threshold value A (that is, Bi+B1 is beyond the overbooking area), the admission control unit 13 rejects the bandwidth admission application.

When the determination result is that the accumulative application bandwidth (Bi+B1) is between the threshold B0 and A (that is, Bi+B1 is within the overbooking area), as shown in FIG. 1(b), at this point, the admission control unit 13 determines whether to accept the bandwidth admission application according to actual use conditions of the current bandwidth. Specifically, at this point, if the further determination result of the determination unit 12 is that the actual use value B2 of the current bandwidth is beyond the threshold C2 and the current use bandwidth has been beyond the bandwidth safety work area, then this bandwidth admission application is rejected.

If the further determination result of the determination unit 12 is that B2+Bi is beyond the threshold C1 and the actual use value of the current bandwidth has entered into a congestion high-risk area (that is, the transmission bandwidth has been congested or a congestion warning occurs), then this bandwidth admission application is rejected.

If the further determination result of the determination unit 12 is that B2+Bi is less than or equal to the threshold C1 (that is, B2+Bi is between C1 and C2), that is, the actual use value of the current actually measured bandwidth enters into the bandwidth stabilizing work area, then the bandwidth admission application is accepted.

When the real time determination result sent by the determination unit 12 is that B2 is greater than C1 (that is, B2 is beyond the bandwidth stabilizing work area), then traffic control is required to be performed, with a view to decrease the actual use value of the current bandwidth to be lower than the threshold C 1 for traffic control, and update B1 and B2 in real time based on the traffic control result.

The measurement unit 14 is configured to measure the actual bandwidth occupancy in a transmission bureau on an IP interface in real time to feed back to the admission control unit 13 periodically.

The sensibility of adjustment and control of the whole device can be determined based on control of a measurement period of B2 actually measured data.

In other embodiments, the user can customize congestion risk and bandwidth utilization efficiency of the device by adjusting values of the thresholds A, C1 and C2 in the configuration unit 11.

In still other embodiments, the determination unit 12 determines that the bandwidth Bi of the bandwidth admission application and the accumulative application bandwidth B1 are within the overbooking area, and will not determine whether the actual use value of the current bandwidth B2 is lower than the bandwidth stabilizing work area, but directly determines whether B2+Bi is beyond the bandwidth stabilizing work area and sends the determination result to the admission control unit 13. At this point, if the determination result received by the admission control unit 13 is that the sum of Bi and the accumulative application bandwidth B 1 is within the overbooking area and B2+Bi is beyond the bandwidth stabilizing work area, then this bandwidth admission application is rejected; if the received determination result is that the sum of Bi and the accumulative application bandwidth B1 is within the overbooking area and B2+Bi is not beyond the bandwidth stabilizing work area, then this bandwidth admission application is accepted.

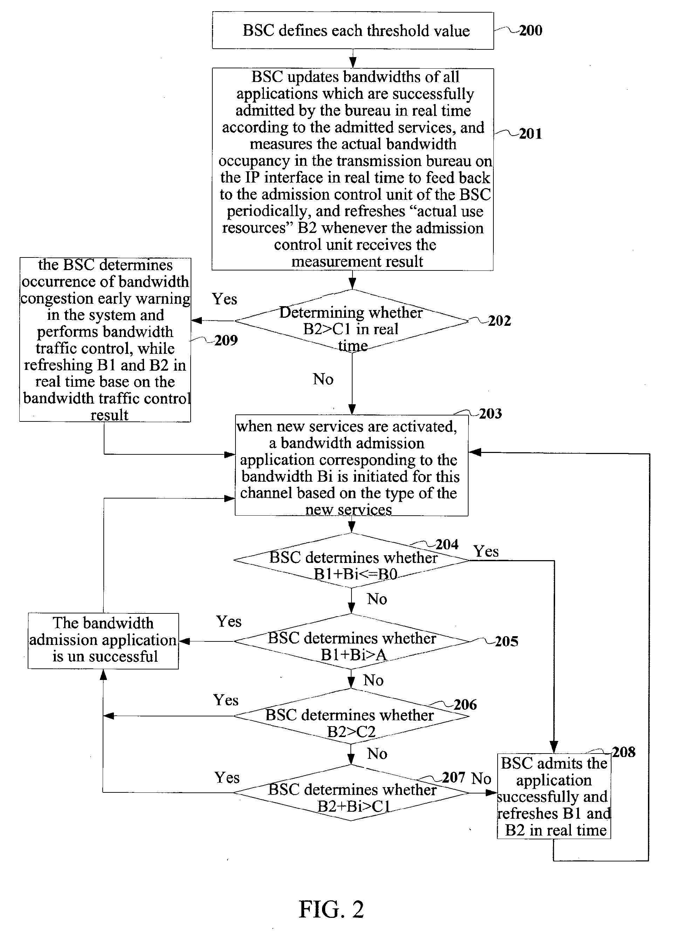

The specific process in which the device described above implements admission control will be described hereinafter. As shown in FIG. 2, the process includes the following steps.

Step 200, a B SC defines (that is, configures) each threshold value.

In this step the BSC defines (that is, configures) bandwidth resources used by a transmission bureau as a bandwidth pool, a bandwidth use upper limit of which is defined as B0, accumulates bandwidths of all applications which are successfully admitted by the bureau into B1, and defines a actual use value of the current bandwidth (that is, the actual bandwidth occupancy in the transmission bureau on an IP interface of a base station controller (BSC)) as a variable B2.

An excess bandwidth distribution upper limit A is configured; in the present embodiment, A can be calculated through the defined excess threshold (which generally is expressed as a percentage a1 or a fixed bandwidth value a2), and at this point the excess bandwidth distribution upper limit A=B0 × (1+a1) or A=B0+a2;
a bandwidth distribution stabilizing upper limit C1 is configured; in the present embodiment, C1 can be calculated through the defined actual bandwidth safety upper limit (which is generally expressed as a percentage m1 or a fixed bandwidth value m2), and at this point the bandwidth distribution stabilizing upper limit C1=B0*(1-m1) or C1=B0-m2.
a bandwidth distribution stabilizing lower limit C2 is configured; in the present embodiment, C2 can be calculated through the defined actual bandwidth safety lower limit (which is generally expressed as a percentage n1 or a fixed bandwidth value n2), and at this point the bandwidth distribution stabilizing lower limit C2=B0*(1-n1) or C2=B0-n2.
where n1>m1, and n2>m2.

Step 201, the BSC updates bandwidths of all applications which are successfully admitted by the bureau in real time according to the admitted services, and measures the actual bandwidth occupancy in the transmission bureau on the IP interface in real time to feed back to the admission control unit of the BSC periodically, and refreshes "actual use resources" B2 whenever the admission control unit receives the measurement result.

Step 202, it is determined whether B2>C1 in real time, and if yes, the process proceeds to step 209, otherwise it proceeds to step 203.

In this step, when the measurement data result is fed back to the admission control unit (that is, the actual bandwidth occupancy on the transmission bureau is measured), the actual use value of the current bandwidth B2 can be refreshed through the fed back actual measurement bandwidth value Bm, that is, B2=Bm, and thus, redundant portions created in previous admission using the theory maximum bandwidth can be removed, in order to admit more services later.

Step 203, when new services are activated, a bandwidth admission application corresponding to the bandwidth Bi is initiated for this channel based on the type of the new services.

Step 204, the BSC determines whether B1+Bi<=B0, and if yes, the bandwidth admission application is successful, and the process proceeds to step 208, otherwise it proceeds to step 205.

Step 205, the BSC determines whether B1+Bi>A, and if yes, the bandwidth admission application is unsuccessful, and the process returns to step 203, otherwise if proceeds to step 206.

When both of the determination results of the beyond steps 204 and 205 are negative, then it can be known that the distribution quota of the resource pool bandwidth after admission is within the overbooking area, as shown in FIG. 1(b), and at this point it is determined whether to admit the application based on actual use conditions of the current bandwidth, and the process proceeds to step 206.

Step 206, the BSC determines whether B2>C2, and if yes, the bandwidth admission application is unsuccessful, otherwise the process proceeds to step 207.

Step 207, the BSC determines whether B2+Bi>C1, and if yes, the bandwidth admission application is unsuccessful, otherwise the process proceeds to step 208.

Step 208, the BSC admits the application successfully, and refreshes B1 and B2 in real time, where B1=B1+Bi, B2=B2+Bi, and the process returns to step 203.

In the present embodiment, the bandwidth value of Bi is an upper limit of the bandwidth value required for the corresponding 2G service type.

Step 209, the BSC determines occurrence of bandwidth congestion early warning in the system and performs bandwidth traffic control, while refreshing B1 and B2 in real time base on the bandwidth traffic control result, and the process returns to step 203.

In this step, the BSC can control bandwidth traffic by controlling the removed services or releasing the admitted bandwidth according to the existing technology, and in the process of the bandwidth traffic control, the objective of releasing the bandwidth is: Bn=B2-C2.

When there are services to be released, the admission bandwidth Bi applied by the services is required to be released, and B1 and B2 are refreshed in real time after the releasing, where B1=B1-Bi, B2=B2-Bi.

In other embodiments, the BSC can select to perform control and measurement on the bandwidths of uplink and downlink services respectively such that application conditions of the asymmetric uplink and downlink bandwidth can be adapted.

In the above processes, the BSC adjusts the performance of the admission control system by defining the two threshold values C 1 and C2. When C1 and C2 are adjusted up to approach the configured bandwidth value, the bandwidth utilization rate of the system will rise, however the congestion risk probability will be increased; conversely, the congestion security of the system will be increased and the bandwidth utilization rate will be decreased. Therefore appropriate C1 and C2 are required to be defined according to actual requirements of the system.

In other embodiments, the determination operation in step 206 may also be not performed, that is, the BSC determines whether B1+Bi>A according to step 205, and if yes, the bandwidth admission application is unsuccessful and the process returns to step 203, otherwise the process proceeds to step 207.

It can be seen from the above embodiments that the technical scheme of the present invention dynamically corrects the distributable bandwidth by using a feedback mechanism so as to bear more service accesses in the case of limited IP transmission resources.

It can be understood by those skilled in the art that all or part of the steps in the beyond-mentioned method can be performed by programs instructing relevant hardware components. The programs can be stored in a computer readable storage medium, such as a read only memory, a magnetic disk or an optical disk, etc. Alternatively, all or part of the steps in the beyond-mentioned embodiments also can be implemented with one or more integrated circuits. Accordingly, each module/unit in the beyond-mentioned embodiments can be implemented in the form of hardware, or in the form of software function module. The present invention is not limit to any specific form of the combination of the hardware and software.

Although the present invention is described in combination with specific embodiments, various modifications and variations may be made by those skilled in the art without departing from the spirit or scope of the present invention. Such modifications or variations should be regarded as within the scope of the present invention and the scope of the appended claims.

### Industrial Applicability

A method and device for implementing admission control in accordance with the present invention dynamically corrects the distributable bandwidth by using a feedback mechanism so as to bear more service accesses in the case of limited IP transmission resources.

## Claims

1. A method for implementing admission control comprising:
when a base station controller receives a bandwidth admission application and when a sum of a bandwidth of the bandwidth admission application and an accumulative application bandwidth is within a preset overbooking area, determining whether a sum of the bandwidth of the bandwidth admission application and an actual use value of a current bandwidth is beyond a bandwidth stabilizing work area, and if yes, rejecting the bandwidth admission application;
wherein a bandwidth position of the overbooking area is higher than a bandwidth position of the bandwidth stabilizing work area.

2. The method according to claim 1, wherein
before determining whether the sum of the bandwidth of the bandwidth admission application and the actual use value of the current bandwidth is beyond the bandwidth stabilizing work area, the base station controller further determines whether the actual use value of the current bandwidth is beyond the bandwidth stabilizing work area;
if the actual use value of the current bandwidth is not beyond the bandwidth stabilizing work area, then it is determined whether the sum of the bandwidth of the bandwidth admission application and the actual use value of the current bandwidth is beyond the bandwidth stabilizing work area; and
if the actual use value of the current bandwidth is beyond the bandwidth stabilizing work area, then the bandwidth admission application is rejected.

3. The method according to claim 2, wherein
if the base station controller determines that the actual use value of the current bandwidth is lower than the bandwidth stabilizing work area and the sum of the bandwidth of the bandwidth admission application and the actual use value of the current bandwidth is not beyond the bandwidth stabilizing work area, then the bandwidth admission application is admitted.

4. The method according to any one of claims 1 to 3, further comprising:
when the base station controller determines that the sum of the bandwidth of the bandwidth admission application and the accumulative application bandwidth is beyond the preset overbooking area, rejecting the bandwidth admission application; and
when the base station controller determines that the sum of the bandwidth of the bandwidth admission application and the accumulative application bandwidth is lower than the preset overbooking area, admitting the bandwidth admission application.

5. The method according to any one of claims 1 to 3, further comprising:
the base station controller updating a current accumulative application bandwidth value in real time and measuring the actual use value of the current bandwidth in real time.

6. The method according to claim 5, wherein:
after the base station controller measures the actual use value of the current bandwidth in real time, if it is determined that the actual use value of the current bandwidth is beyond the bandwidth stabilizing work area, then bandwidth traffic control is performed, the actual use value of the bandwidth is decreased to be within the bandwidth stabilizing work area, and the actual use value of the current bandwidth and the current accumulative application bandwidth value are updated in real time based on bandwidth traffic control results.

7. The method according to any one of claims 1 to 3, further comprising:
the base station controller determining the overbooking area based on an bandwidth use upper limit and an preset excess bandwidth distribution upper limit; and
the base station controller determining the bandwidth stabilizing work area based on a preset bandwidth distribution stabilizing lower limit value and an bandwidth distribution stabilizing upper limit value.

8. An device for implementing admission control comprising a determination unit (12) and an
admission control unit (13), wherein
the determination unit (12) is configured to, when a bandwidth admission application is received and when a sum of a bandwidth of the bandwidth admission application and an accumulative application bandwidth is within a preset overbooking area, and if it is determined that a sum of the bandwidth of the bandwidth admission application and a actual use value of a current bandwidth is beyond a bandwidth stabilizing work area, send the determination result to the admission control unit (13), wherein a bandwidth position of the overbooking area is higher than a bandwidth position of the bandwidth stabilizing work area; and
the admission control unit is configured to receive the determination result sent by the determination unit, and reject the bandwidth admission application when the determination result is that the sum of the bandwidth of the bandwidth admission application and the actual use value of the current bandwidth is beyond the bandwidth stabilizing work area.

9. The device according to claim 8, wherein:
the determination unit is further configured to determine whether the actual use value of the current bandwidth is beyond the bandwidth stabilizing work area and send the determination result to the admission control unit; and
the admission control unit is further configured to reject the bandwidth admission application when the received determination result is that the actual use value of the current bandwidth is beyond the bandwidth stabilizing work area; and accept the bandwidth admission application when the received determination result is that the actual use value of the current bandwidth is not beyond the bandwidth stabilizing work area and the sum of the bandwidth of the bandwidth admission application and the actual use value of the current bandwidth is not beyond the bandwidth stabilizing work area.

10. The device according to claim 8 or 9, wherein:
the determination unit is further configured to send the determination result to the admission control unit when determining that the sum of the bandwidth of the bandwidth admission application and the accumulative application bandwidth is beyond the preset overbooking area; and send the determination result to the admission control unit when determining that the sum of the bandwidth of the bandwidth admission application and the accumulative application bandwidth is lower than the preset overbooking area; and
the admission control unit is further configured to reject the bandwidth admission application when the received determination result is that the sum of the bandwidth of the bandwidth admission application and the accumulative application bandwidth is beyond the preset overbooking area; and admit the bandwidth admission application when the received determination result is that the sum of the bandwidth of the bandwidth admission application and the accumulative application bandwidth is lower than the preset overbooking area.

11. The device according to claim 8 or 9, wherein:
the determination unit is further configured to read the actual use value of the current bandwidth in the admission control unit, determine whether the read actual use value of the current bandwidth is beyond the bandwidth stabilizing work area in real time, and send the determination result to the admission control unit; and
the admission control unit is further configured to, when the received determination result is that the actual use value of the current bandwidth is beyond the bandwidth stabilizing work area, perform bandwidth traffic control, decrease the actual use value of the bandwidth to be within the bandwidth stabilizing work area, and update the actual use value of the current bandwidth and the current accumulative application bandwidth value in real time based on bandwidth traffic control results.

## Patentansprüche

1. Ein Verfahren zur Implementierung einer Zulassungskontrolle, das Folgendes beinhaltet:
wenn eine Basisstationssteuerung eine Bandbreitenzulassungsanwendung empfängt und wenn eine Summe einer Bandbreite der Bandbreitenzulassungsanwendung und
einer akkumulierenden Anwendungsbandbreite innerhalb eines voreingestellten Überbuchungsbereichs liegt, Bestimmen, ob eine Summe der Bandbreite der Bandbreitenzulassungsanwendung und eines tatsächlichen Nutzungswerts einer aktuellen Bandbreite über einem Bandbreite stabilisierenden Arbeitsbereich liegt, und
wenn ja, Zurückweisen der Bandbreitenzulassungsanwendung;
wobei eine Bandbreitenposition des Überbuchungsbereichs höher als eine Bandbreitenposition des Bandbreite stabilisierenden Arbeitsbereichs ist.

2. Verfahren gemäß Anspruch 1, wobei
vor dem Bestimmen, ob die Summe der Bandbreite der Bandbreitenzulassungsanwendung und des tatsächlichen Nutzungswerts der aktuellen Bandbreite über dem Bandbreite stabilisierenden Arbeitsbereich liegt, die Basisstationssteuerung ferner bestimmt, ob der tatsächliche Nutzungswert der aktuellen Bandbreite über dem Bandbreite stabilisierenden Arbeitsbereich liegt; wenn der tatsächliche Nutzungswert der aktuellen Bandbreite nicht über dem Bandbreite stabilisierenden Arbeitsbereich liegt, dann wird bestimmt, ob die Summe der Bandbreite der Bandbreitenzulassungsanwendung und des tatsächlichen Nutzungswerts der aktuellen Bandbreite über dem Bandbreite stabilisierenden Arbeitsbereich liegt; und
wenn der tatsächliche Nutzungswert der aktuellen Bandbreite über dem Bandbreite stabilisierenden Arbeitsbereich liegt, dann wird die Bandbreitenzulassungsanwendung zurückgewiesen.

3. Verfahren gemäß Anspruch 2, wobei
wenn die Basisstationssteuerung bestimmt, dass der tatsächliche Nutzungswert der aktuellen Bandbreite niedriger als der Bandbreite stabilisierende Arbeitsbereich ist und die Summe der Bandbreite der Bandbreitenzulassungsanwendung und des tatsächlichen Nutzungswerts der aktuellen Bandbreite nicht über dem Bandbreite stabilisierenden Arbeitsbereich liegt, die Bandbreitenzulassungsanwendung dann zugelassen wird.

4. Verfahren gemäß einem der Ansprüche 1 bis 3, das ferner Folgendes beinhaltet:
wenn die Basisstationssteuerung bestimmt, dass die Summe der Bandbreite der Bandbreitenzulassungsanwendung und der akkumulierenden Anwendungsbandbreite über dem voreingestellten Überbuchungsbereich liegt, Zurückweisen der Bandbreitenzulassungsanwendung; und
wenn die Basisstationssteuerung bestimmt, dass die Summe der Bandbreite der Bandbreitenzulassungsanwendung und der akkumulierenden Anwendungsbandbreite niedriger als der voreingestellte Überbuchungsbereich ist, Zulassen der Bandbreitenzulassungsanwendung.

5. Verfahren gemäß einem der Ansprüche 1 bis 3, das ferner Folgendes beinhaltet:
die Basisstationssteuerung aktualisiert einen aktuellen akkumulierenden Anwendungsbandbreitenwert in Echtzeit und misst den tatsächlichen Nutzungswert der aktuellen Bandbreite in Echtzeit.

6. Verfahren gemäß Anspruch 5, wobei:
nachdem die Basisstationssteuerung den tatsächlichen Nutzungswert der aktuellen Bandbreite in Echtzeit gemessen hat, wenn bestimmt wird, dass der tatsächliche Nutzungswert der aktuellen Bandbreite über dem Bandbreite stabilisierenden Arbeitsbereich liegt, dann eine Bandbreitenverkehrssteuerung durchgeführt wird, der tatsächliche Nutzungswert der Bandbreite verringert wird, so dass dieser innerhalb des Bandbreite stabilisierenden Arbeitsbereichs liegt, und der tatsächliche Nutzungswert der aktuellen Bandbreite und der aktuelle akkumulative Anwendungsbandbreitenwert basierend auf den Ergebnissen der Bandbreitenverkehrssteuerung in Echtzeit aktualisiert werden.

7. Verfahren gemäß einem der Ansprüche 1 bis 3, das ferner Folgendes beinhaltet:
die Basisstationssteuerung bestimmt, basierend auf einer oberen Grenze der Bandbreitennutzung und einer voreingestellten oberen Grenze der Überschussbandbreitenverteilung, den Überbuchungsbereich; und
die Basisstationssteuerung bestimmt, basierend auf einem voreingestellten Bandbreitenverteilung stabilisierenden unteren Grenzwert und einem Bandbreitenverteilung stabilisierenden oberen Grenzwert, den Bandbreite stabilisierenden Arbeitsbereich.

8. Eine Vorrichtung zur Implementierung einer Zulassungskontrolle, die eine Bestimmungseinheit (12) und eine Zulassungskontrolleinheit (13) beinhaltet, wobei die Bestimmungseinheit (12) konfiguriert ist, um, wenn eine Bandbreitenzulassungsanwendung empfangen wird und wenn eine Summe einer Bandbreite der Bandbreitenzulassungsanwendung und einer akkumulierenden Anwendungsbandbreite innerhalb eines voreingestellten Überbuchungsbereichs liegt, und wenn bestimmt wird, dass eine Summe der Bandbreite der Bandbreitenzulassungsanwendung und eines tatsächlichen Nutzungswerts einer aktuellen Bandbreite über einem Bandbreite stabilisierenden Arbeitsbereich liegt, das Bestimmungsergebnis an die Zulassungskontrolleinheit (13) zu senden, wobei eine Bandbreitenposition des Überbuchungsbereichs höher als eine Bandbreitenposition des Bandbreite stabilisierenden Arbeitsbereichs ist; und
die Zulassungskontrolleinheit konfiguriert ist, um das durch die Bestimmungseinheit gesendete Bestimmungsergebnis zu empfangen und die Bandbreitenzulassungsanwendung zurückzuweisen, wenn das Bestimmungsergebnis ist, dass die Summe der Bandbreite der Bandbreitenzulassungsanwendung und des tatsächlichen Nutzungswerts der aktuellen Bandbreite über dem Bandbreite stabilisierenden Arbeitsbereich liegt.

9. Vorrichtung gemäß Anspruch 8, wobei:
die Bestimmungseinheit ferner konfiguriert ist, um zu bestimmen, ob der tatsächliche Nutzungswert der aktuellen Bandbreite über dem Bandbreite stabilisierenden Arbeitsbereich liegt und das Bestimmungsergebnis an die Zulassungskontrolleinheit zu senden; und
die Zulassungskontrolleinheit ferner konfiguriert ist, um die Bandbreitenzulassungsanwendung zurückzuweisen, wenn das empfangene Bestimmungsergebnis ist, dass der tatsächliche Nutzungswert der aktuellen Bandbreite über dem Bandbreite stabilisierenden Arbeitsbereich befindet; und die Bandbreitenzulassungsanwendung zu akzeptieren, wenn das empfangene Bestimmungsergebnis ist, dass der tatsächliche Nutzungswert der aktuellen Bandbreite nicht über dem Bandbreite stabilisierenden Arbeitsbereich liegt und die Summe der Bandbreite der Bandbreitenzulassungsanwendung und der tatsächliche Nutzungswert der aktuellen Bandbreite nicht über dem Bandbreite stabilisierenden Arbeitsbereich liegt.

10. Vorrichtung gemäß Anspruch 8 oder 9, wobei:
die Bestimmungseinheit ferner konfiguriert ist, um das Bestimmungsergebnis an die Zulassungskontrolleinheit zu senden, wenn bestimmt wird, dass die Summe der Bandbreite der Bandbreitenzulassungsanwendung und der akkumulierenden Anwendungsbandbreite über dem voreingestellten Überbuchungsbereich liegt; und das Bestimmungsergebnis an die Zulassungskontrolleinheit zu senden, wenn bestimmt wird, dass die Summe der Bandbreite der Bandbreitenzulassungsanwendung und der akkumulierenden Anwendungsbandbreite niedriger als der voreingestellte Überbuchungsbereich ist; und
die Zulassungskontrolleinheit ferner konfiguriert ist, um die Bandbreitenzulassungsanwendung zurückzuweisen, wenn das empfangene Bestimmungsergebnis ist, dass die Summe der Bandbreite der Bandbreitenzulassungsanwendung und der akkumulierenden Anwendungsbandbreite über dem voreingestellten Überbuchungsbereich liegt; und die Bandbreitenzulassungsanwendung zuzulassen, wenn das empfangene Bestimmungsergebnis ist, dass die Summe der Bandbreite der Bandbreitenzulassungsanwendung und der akkumulierenden Anwendungsbandbreite niedriger als der voreingestellte Überbuchungsbereich ist.

11. Vorrichtung gemäß Anspruch 8 oder 9, wobei:
die Bestimmungseinheit ferner konfiguriert ist, um den tatsächlichen Nutzungswert der aktuellen Bandbreite in der Zulassungskontrolleinheit zu lesen, zu bestimmen, ob der gelesene tatsächliche Nutzungswert der aktuellen Bandbreite in Echtzeit über dem Bandbreite stabilisierenden Arbeitsbereich liegt, und das Bestimmungsergebnis an die Zulassungskontrolleinheit zu senden; und
die Zulassungskontrolleinheit ferner konfiguriert ist, um, wenn das empfangene Bestimmungsergebnis ist, dass der tatsächliche Nutzungswert der aktuellen Bandbreite über dem Bandbreite stabilisierenden Arbeitsbereich liegt, eine Bandbreitenverkehrssteuerung durchzuführen, den tatsächlichen Nutzungswert der Bandbreite zu verringern, so dass dieser innerhalb des Bandbreite stabilisierenden Arbeitsbereichs liegt, und den tatsächlichen Nutzungswert der aktuellen Bandbreite und
den aktuellen akkumulativen Anwendungsbandbreitenwert basierend auf den Ergebnissen der Bandbreitenverkehrssteuerung in Echtzeit zu aktualisieren.

## Revendications

1. Une méthode pour mettre en oeuvre un contrôle d'admission comprenant :
lorsqu'un contrôleur de station de base reçoit une demande d'admission de largeur de bande et lorsqu'une somme d'une largeur de bande de la demande d'admission de largeur de bande et d'une largeur de bande de demande cumulative est dans les limites d'une zone de surréservation préétablie, déterminer si une somme de la largeur de bande de la demande d'admission de largeur de bande et d'une valeur d'utilisation réelle d'une largeur de bande actuelle est au-delà d'une zone de travail de stabilisation de largeur de bande, et si oui, rejeter la demande d'admission de largeur de bande ;
dans laquelle une position de largeur de bande de la zone de surréservation est plus élevée qu'une position de largeur de bande de la zone de travail de stabilisation de largeur de bande.

2. La méthode selon la revendication 1, dans laquelle
avant de déterminer si la somme de la largeur de bande de la demande d'admission de largeur de bande et de la valeur d'utilisation réelle de la largeur de bande actuelle est au-delà de la zone de travail de stabilisation de largeur de bande, le contrôleur de station de base détermine en outre si la valeur d'utilisation réelle de la largeur de bande actuelle est au-delà de la zone de travail de stabilisation de largeur de bande ;
si la valeur d'utilisation réelle de la largeur de bande actuelle n'est pas au-delà de la zone de travail de stabilisation de largeur de bande, alors il est déterminé si la somme de la largeur de bande de la demande d'admission de largeur de bande et de la valeur d'utilisation réelle de la largeur de bande actuelle est au-delà de la zone de travail de stabilisation de largeur de bande ; et
si la valeur d'utilisation réelle de la largeur de bande actuelle est au-delà de la zone de travail de stabilisation de largeur de bande, alors la demande d'admission de largeur de bande est rejetée.

3. La méthode selon la revendication 2, dans laquelle
si le contrôleur de station de base détermine que la valeur d'utilisation réelle de la largeur de bande actuelle est plus basse que la zone de travail de stabilisation de largeur de bande et que la somme de la largeur de bande de la demande d'admission de largeur de bande et de la valeur d'utilisation réelle de la largeur de bande actuelle n'est pas au-delà de la zone de travail de stabilisation de largeur de bande, alors la demande d'admission de largeur de bande est admise.

4. La méthode selon l'une quelconque des revendications 1 à 3, comprenant en outre :
lorsque le contrôleur de station de base détermine que la somme de la largeur de bande de la demande d'admission de largeur de bande et de la largeur de bande de demande cumulative est au-delà de la zone de surréservation préétablie, rejeter la demande d'admission de largeur de bande ; et
lorsque le contrôleur de station de base détermine que la somme de la largeur de bande de la demande d'admission de largeur de bande et de la largeur de bande de demande cumulative est plus basse que la zone de surréservation préétablie, admettre la demande d'admission de largeur de bande.

5. La méthode selon l'une quelconque des revendications 1 à 3, comprenant en outre :
le fait que le contrôleur de station de base met à jour une valeur de largeur de bande de demande cumulative actuelle en temps réel et mesure la valeur d'utilisation réelle de la largeur de bande actuelle en temps réel.

6. La méthode selon la revendication 5, dans laquelle :
après que le contrôleur de station de base a mesuré la valeur d'utilisation réelle de la largeur de bande actuelle en temps réel, s'il est déterminé que la valeur d'utilisation réelle de la largeur de bande actuelle est au-delà de la zone de travail de stabilisation de largeur de bande, alors un contrôle de trafic de largeur de bande est effectué, la valeur d'utilisation réelle de la largeur de bande est diminuée pour être dans les limites de la zone de travail de stabilisation de largeur de bande, et la valeur d'utilisation réelle de la largeur de bande actuelle et la valeur de largeur de bande de demande cumulative actuelle sont mises à jour en temps réel sur la base de résultats de contrôle de trafic de largeur de bande.

7. La méthode selon l'une quelconque des revendications 1 à 3, comprenant en outre :
le fait que le contrôleur de station de base détermine la zone de surréservation sur la base d'une limite supérieure d'utilisation de largeur de bande et d'une limite supérieure de distribution de largeur de bande en excès préétablie ; et
le fait que le contrôleur de station de base détermine la zone de travail de stabilisation de largeur de bande sur la base d'une valeur de limite inférieure de stabilisation de distribution de largeur de bande préétablie et d'une valeur de limite supérieure de stabilisation de distribution de largeur de bande.

8. Un dispositif pour mettre en oeuvre un contrôle d'admission comprenant une unité de détermination (12) et une unité de contrôle d'admission (13), dans lequel l'unité de détermination (12) est configurée, lorsqu'une demande d'admission de largeur de bande est reçue et lorsqu'une somme d'une largeur de bande de la demande d'admission de largeur de bande et d'une largeur de bande de demande cumulative est dans les limites d'une zone de surréservation préétablie, et s'il est déterminé qu'une somme de la largeur de bande de la demande d'admission de largeur de bande et d'une valeur d'utilisation réelle d'une largeur de bande actuelle est au-delà d'une zone de travail de stabilisation de largeur de bande, pour envoyer le résultat de détermination à l'unité de contrôle d'admission (13), une position de largeur de bande de la zone de surréservation étant plus élevée qu'une position de largeur de bande de la zone de travail de stabilisation de largeur de bande ; et
l'unité de contrôle d'admission est configurée pour recevoir le résultat de détermination envoyé par l'unité de détermination, et rejeter la demande d'admission de largeur de bande lorsque le résultat de détermination est que la somme de la largeur de bande de la demande d'admission de largeur de bande et de la valeur d'utilisation réelle de la largeur de bande actuelle est au-delà de la zone de travail de stabilisation de largeur de bande.

9. Le dispositif selon la revendication 8, dans lequel :
l'unité de détermination est en outre configurée pour déterminer si la valeur d'utilisation réelle de la largeur de bande actuelle est au-delà de la zone de travail de stabilisation de largeur de bande et envoyer le résultat de détermination à l'unité de contrôle d'admission ; et
l'unité de contrôle d'admission est en outre configurée pour rejeter la demande d'admission de largeur de bande lorsque le résultat de détermination reçu est que la valeur d'utilisation réelle de la largeur de bande actuelle est au-delà de la zone de travail de stabilisation de largeur de bande ; et accepter la demande d'admission de largeur de bande lorsque le résultat de détermination reçu est que la valeur d'utilisation réelle de la largeur de bande actuelle n'est pas au-delà de la zone de travail de stabilisation de largeur de bande et que la somme de la largeur de bande de la demande d'admission de largeur de bande et de la valeur d'utilisation réelle de la largeur de bande actuelle n'est pas au-delà de la zone de travail de stabilisation de largeur de bande.

10. Le dispositif selon la revendication 8 ou la revendication 9, dans lequel :
l'unité de détermination est en outre configurée pour envoyer le résultat de détermination à l'unité de contrôle d'admission lors de la détermination que la somme de la largeur de bande de la demande d'admission de largeur de bande et de la largeur de bande de demande cumulative est au-delà de la zone de surréservation préétablie ;
et envoyer le résultat de détermination à l'unité de contrôle d'admission lors de la détermination que la somme de la largeur de bande de la demande d'admission de largeur de bande et de la largeur de bande de demande cumulative est plus basse que la zone de surréservation préétablie ; et
l'unité de contrôle d'admission est en outre configurée pour rejeter la demande d'admission de largeur de bande lorsque le résultat de détermination reçu est que la somme de la largeur de bande de la demande d'admission de largeur de bande et de la largeur de bande de demande cumulative est au-delà de la zone de surréservation préétablie ; et admettre la demande d'admission de largeur de bande lorsque le résultat de détermination reçu est que la somme de la largeur de bande de la demande d'admission de largeur de bande et de la largeur de bande de demande cumulative est plus basse que la zone de surréservation préétablie.

11. Le dispositif selon la revendication 8 ou la revendication 9, dans lequel :
l'unité de détermination est en outre configurée pour lire la valeur d'utilisation réelle de la largeur de bande actuelle dans l'unité de contrôle d'admission, déterminer si la valeur d'utilisation réelle lue de la largeur de bande actuelle est au-delà de la zone de travail de stabilisation de largeur de bande en temps réel, et envoyer le résultat de détermination à l'unité de contrôle d'admission ; et
l'unité de contrôle d'admission est en outre configurée, lorsque le résultat de détermination reçu est que la valeur d'utilisation réelle de la largeur de bande actuelle est au-delà de la zone de travail de stabilisation de largeur de bande, pour effectuer un contrôle de trafic de largeur de bande, diminuer la valeur d'utilisation réelle de la largeur de bande pour être dans les limites de la zone de travail de stabilisation de largeur de bande, et mettre à jour la valeur d'utilisation réelle de la largeur de bande actuelle et la valeur de largeur de bande de demande cumulative actuelle en temps réel sur la base de résultats de contrôle de trafic de largeur de bande.
